(19) Europäisches Patentamt
European Patent Office
Office européen des brevets

(11) **EP 3 923 717 B1**

(12) # EUROPEAN PATENT SPECIFICATION

(45) Date of publication and mention
of the grant of the patent:
**10.09.2025 Bulletin 2025/37**

(21) Application number: **20703303.6**

(22) Date of filing: **06.02.2020**

(51) International Patent Classification (IPC):
***A01M 7/00*** *(2006.01)*

(52) Cooperative Patent Classification (CPC):
**A01M 7/0089**

(86) International application number:
**PCT/IB2020/050958**

(87) International publication number:
**WO 2020/165701 (20.08.2020 Gazette 2020/34)**

---

(54) **INSECT ATTACK RISK PREDICTION SYSTEM AND METHOD**

SYSTEM UND VERFAHREN ZUR VORHERSAGE DES RISIKOS VON INSEKTENANGRIFFEN

SYSTÈME ET PROCÉDÉ DE PRÉDICTION DE RISQUE D'ATTAQUE D'INSECTES

---

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 IT 201900002249**

(43) Date of publication of application:
**22.12.2021 Bulletin 2021/51**

(73) Proprietor: **Agrorobotica S.r.l.**
**58020 Scarlino (GR) (IT)**

(72) Inventors:
• **SOZZI SABATINI, Andrea**
  **58020 Scarlino (GROSSETO) (IT)**
• **BROTZU, Alessandra**
  **58020 Scarlino (GROSSETO) (IT)**

(74) Representative: **Praxi Intellectual Property Milano**
**Via Mario Pagano, 69/A**
**20145 Milano (IT)**

(56) References cited:
**WO-A1-2015/132208     CN-A- 105 850 930
CN-A- 108 244 071**

---

**Description**

TECHNICAL FIELD

The present invention relates to a system and a method to predict insect attack risk.

BACKGROUND OF THE INVENTION

In agriculture, insect attacks are one of the largest sources of damages for crops. By their nature, insect attacks appears to be unpredictable and generally different season by season, due to a number of constantly changing factors, including, but not limited to, weather pattern, crops growth and disposition.

Late discovery of insect attack is hence a serious issue, as available remedies may be ineffective to save crops. Especially, lack of efficient and timely monitoring is one of the main reasons why the use of biological pesticides is struggling to widespread due to its limited effectiveness in time.

The known monitoring and prediction techniques are based on experts (e.g. entomologists) who directly analyse the crops or, according to more recent solutions, remotely evaluate pictures to identify target insects and empirically estimate possible attacks.

The known techniques are proving to be inefficient since they require human interventions and skills to identify the specific target insects and show significant limitations in the capability of predict insect attacks.

Document CN 105 850 930A discloses a greenhouse crop pest and disease early warning system.

Document CN 108 244 071A describes a pest prediction system employing an insect trapping device, a photographing device, a data collecting device and temperature, humidity sensor and gas sensors.

SUMMARY OF THE INVENTION

The present invention addresses the problem of providing and insect attack risk prediction system which shows satisfying prediction performances.

According to a first object, the present invention relates to an insect attack prediction system defined by the appended independent claim 1. Particular embodiments of the system are described by the dependent claims 2-8.

In accordance with a second object, the present invention relates to an insect attack prediction method defined by the appended independent claim 9.

BRIEF DESCRIPTION OF THE DRAWINGS

Further characteristics and advantages will be more apparent from the following description of a preferred embodiment and of its alternatives given as an example with reference to the enclosed drawings in which:

Figure 1 schematically shows an example of an insect attack prediction system;
Figure 2 is a flowchart showing an example of an insect attack prediction method, implementable by said system.

DETAILED DESCRIPTION

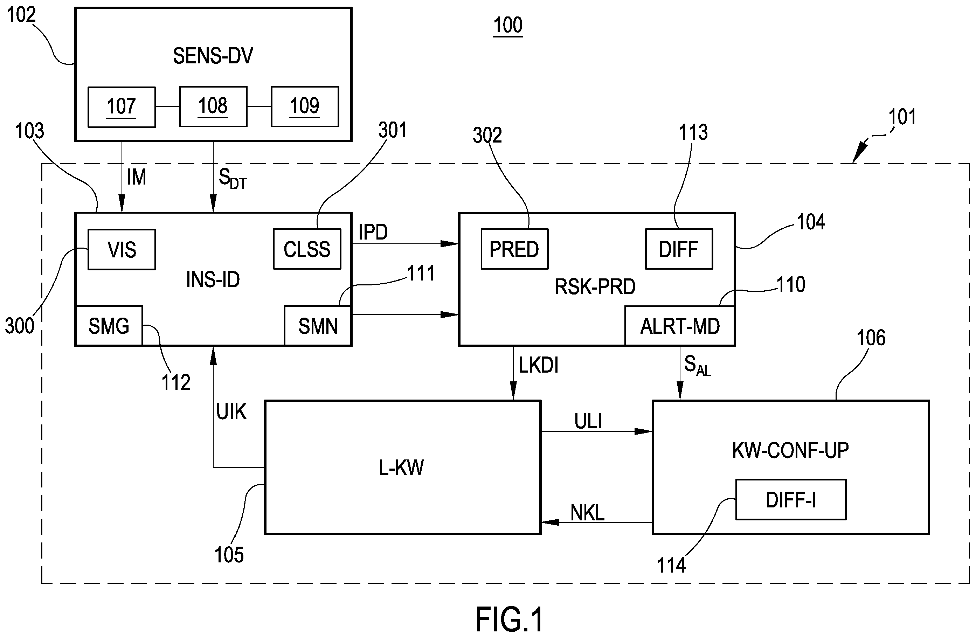

Figure 1 schematically shows an embodiment of insect attack prediction system 100 configured to predict the probability of an insect attack to an area of interest. The insect attack prediction system 100 (hereinafter, prediction system, for the sake of brevity) can predict the insect attack carried out, as an example, by the following insect species: Bactrocera Oleae, Lobesia botrana, Cydia pomonella, Cydia molesta, Cydia funebrana, Spodoptera littoralis, Spodoptera exigua, Helicoverpa armigera. The area of interest is geographical zone, such as a particular field having different possible dimensions. The prediction system 100 can also predict attacks in more than one areas of interest.

Particularly, the insect attack prediction system 100 as represented in figure 1 comprises a processor apparatus 101 and a sensing apparatus 102 (SEN-DV). The processor apparatus 101 comprises at least a memory configured to store data and instructions. Particularly, the processor apparatus 101 comprises at least one processor, and more particularly, it can be a network of processors (such a telematics network) which can be organized, as an example, to operate according to a cloud technology.

The memories of the processor apparatus 101 include instructions to configure the processor apparatus 101 so as to perform an insect attach prediction method. According to the example of figure 1, some of the instructions executable by the processor apparatus 101 can be grouped in a plurality of software modules comprising: an insect identification module 103 (INS-ID) and a risk prediction module 104 (RSK-PRD).

According to the described example, the sensor apparatus 102, the insect identification module 103 and the risk prediction module 104 are local modules, i.e. they are functionally associated to a specific area of interest. If the prediction system 100 is configured to serve a plurality of different areas of interest further sensor apparatuses 102, further insect identification modules 103 and further risk prediction modules 104 can be employed.

Moreover, the following additional software modules can be executed by the processor apparatus 101: a local knowledge module (L-KW) 105 and a knowledge configuring and updating module 106 (KW-CONF-UPDT).

Particularly, the sensing apparatus 102 comprises at least a digital camera 107 to take digital images. The digital camera 107 can be a photo-camera or a video-camera. More particularly, the digital camera 107 can be selected from the group: RGB camera, infrared camera, ultraviolet camera.

Moreover, the sensing apparatus 102 may comprise at least one meteorological sensor 108 configured to detect at least one meteorological quantity. As an example, the meteorological quantities can be selected from the group: temperature, humidity, pressure, moisture level, leaf hygrometer.

Furthermore, the sensing apparatus 102 can comprise at least one environmental sensor 109 configured to detect at least one environmental quantity. To the purpose of the present invention, an environmental quantity is a physical or chemical quantity indicative of environmental pollution and which is not identified as a standard meteorological quantity. As an example, the environmental quantities can be selected from the group: quality of air (e.g. carbon dioxide $CO_2$ concentration, carbon monoxide CO concentration, Volatile Organic Compounds concentration, Ammonia concentration, etc.), luminosity, sound presence, sound level, long terms seasonal time, uses of pesticide.

The sensing apparatus 102 can also include suitable electronic circuits necessary to the conditioning of the signals provided by the sensors, their conversion into digital form, together with suitable software configured to acquire the measured quantities for following digital processing.

According to a specific embodiment, at least the digital camera 107 and/or other sensors of the sensing apparatus 102 can be housed in a trap device (not shown) for in situ capture of infesting insects. As an example, the trap device described in the Italian patent application document No. 102018000001753 (=IT201800001753) can be employed in the prediction system 100. An employable trap device comprises a housing with an inner chamber provided with at least one opening towards the external environment and devices (such as a sticky paper) configured to capture and immobilize the insect. Moreover, the trap device may include devices configured to release substances (such as pheromone) suitable for attracting the insect in the inner chamber. The employed digital camera 107 is oriented to take digital images IM of the insects captured by the sticky paper. In area of interest, one or more trap devices can be installed.

The sensing apparatus 102 is configured to provide digital images IM and further electrical detected signals $S_{DT}$ (carrying the detected quantities), to the insect identification module 103.

The insect identification module 103 is configured to process at least one insect digital image IM to provide a presence data IPD representing the presence of the insect in an area of interest. Particularly, the insect identification module 103 is configured to identify an insect of a specific species (also called, target insect) from a digital image. More particularly, the insect identification module 103 is also configured to count the total number of insects present in a single image and/or in a plurality of images taken in subsequent times.

According to an embodiment, the insect identification module 103 comprises software instructions implementing a computer vision algorithm 300 (VIS) to extract feature values from a digital image IM and an insect classification algorithm 301 (CLSS). The computer vision algorithm 300 can be a known computer vision tool configured to elaborate the digital image IM to extract values of entomologic parameters.

As an example, the considered entomologic parameters include at least one parameter selected from the group: colour of the insect eyes, length of the insect and of the wings, colour of the tip of the wings, length and colour of the sting, spot on the abdomens. Particularly, the identification of the insect could be performed by evaluating the similarity between the entomologic reference parameters and the entomologic measured parameters, according to pre-established weights.

The insect classification algorithm 301 can be based on a comparison of pre-established entomologic parameters with the entomologic parameters as measured from the computer vision algorithm 300. The entomologic reference parameters are values (or value ranges) pre-established on the basis of a knowledge of the insect species in connection with the area of interest.

Furthermore, the insect classification algorithm 301 can also be based on the meteorological quantities (provided by the sensing apparatus 102) associated to the insect catch time, such as an example: interval of temperature during the catch and/or interval of humidity during the catch. Moreover, the insect classification algorithm 301 can also be based on the environmental quantities provided by the sensing apparatus 102.

A known classification algorithm can be used to implement insect classification algorithm 301. Particularly, the insect classification algorithm 301 can be a non-neural network based algorithm (e.g. a target optimization function) or a neural network based algorithm. As an example, the insect identification algorithm can include a Convolutional Neural Network (CNN).

It is noticed that a data set comprising a correlation between entomologic parameters, meteorological quantities, environmental quantities and corresponding insect identified species can be part of an insect behavioural knowledge data set. This insect behavioural knowledge data set can be stored in the local knowledge module 105, to be accessed by the knowledge configuring and updating module 106. Particularly, the knowledge configuring and updating module 106 is a software module responsible for the creation and propagation of the most updated knowledge on target insects to the local knowledge module 105 and the further local knowledge modules 105, when employed (as represented in figure 1 by the link NKL). The local knowledge module 105 transmits the most updated insect behavioural knowledge data set to the relevant insect identification module 103 (as indicated in figure 1 by link UIK).

It is observed that an improvement (such as more effective set) of an insect behavioural knowledge data set (adopted by a specific insect identification modules 103) that could be useful for further insect identification modules 103 can be detected automatically by the knowledge configuring and updating module 106 taking into account user feedbacks and/or data concerning occurred attacks.

To this purpose the knowledge configuring and updating module 106 can be provided with a difference detection module 114 (DIFF-I), such as a software module configured to detect differences between insect behavioural knowledge data sets.

With reference to the insect classification algorithm 301, it is noticed that it can be fully defined by a classification algorithm definition data set comprising: a model typology (e.g. CNN model), configuration values (e.g. the values of the weights of the CNN) and variable types (i.e. the variable processed by the algorithm itself).

It is observed that the knowledge configuring and updating module 106 is a software module that allows configuring the specific employed insect classification algorithm 301 by defining and storing the classification algorithm definition data sets associated to one or more areas of interest. Moreover, each local knowledge module 105 stores the associated algorithm definition data set. As an example, the local knowledge module 105 is also responsible of the safe transition of parameters, information and data between the insect identification module 103 and the knowledge configuring and updating module 106 (as represented by a first communication link ULI).

According to a particular example, it possible to use a first classification algorithm 301 of the non-neural network type for a first operation period. This first classification algorithm 301 allows creating and updating an insect behavioural knowledge data set. Subsequently, taking into account the insect behavioural knowledge data set obtained in the first operation period, a second classification algorithm based, as an example, on neural network can be trained and employed to identify insects in a second operation period. In accordance with this embodiment, the second classification algorithm replaces the first classification algorithm.

Reference is now made to the risk prediction module 104. The risk prediction module 104 is configured to operate according to a mathematical prediction algorithm 302 (PRED) in order to estimate the risk of insect attack to the area of interest. The risk prediction module 104 processes the results provided by the insect identification module 103 (such as the presence data IPD or the counted insect number) according to the mathematical prediction algorithm 302.

Moreover, the risk prediction module 104 is configured to estimate the probability of attack by also processing at least one of the following quantities/data: at least one meteorological quantity, at least one environmental quantity and historical data for insect presence. Preferably, the risk prediction module 104 is configured to estimate the probability of attack by processing at least two of the following quantities/data: at least one meteorological quantity, at least one environmental quantity and historical data for insect presence. More preferably, all the above listed three quantity/data types (meteorological, environmental and historical) can be processed by the risk prediction module 104.

The meteorological quantities and the environmental quantities have been already defined. Particularly, a trend of the counted number of insects (e.g. an increasing gradient) and a trend of the meteorological quantity (e.g. particular conditions of temperature and humidity on a time interval) are useful in the prediction of insect attack.

The historical data for insect presence include, as an example, data on insect attacks to the specific area of interest occurred before the current period of time submitted to the risk estimation. The historical data can be short-term series (e.g. concerning the previous five years) or long-term series (e.g. concerning a time windows of more than five years).

Moreover, the historical data for insect presence can be provided together with related meteorological and environmental quantities. In addition, historical data for insect presence, relating to previously occurred insect attacks to other areas, different from the area of interest, can be taken into consideration.

Moreover, the risk prediction module 104 can also operate, preferably, basing on geographical data describing the area of interest. As an example, the geographical data refer to the presence of a natural barrier (such as, a hill of a mountain or a river) that could influence local conditions both positively or negatively.

It is noticed that the occurrence of an insect attack depends on many factors, partially described in entomology, such as, for example: the increase in the presence of insects (e.g. a fly) over time, a certain meteorological condition extended over time (temperature, humidity, etc.) geographical factors, etc.

The mathematical prediction algorithm 302 can be based on algorithms requiring Machine Learning; such algorithms can be neural network based (e.g. CNN) or on non-neural network based. As an example, non-neural network algorithms can include Logistic Regression or Random Forest algorithm.

The mathematical prediction algorithm 302 can be fully defined by a prediction algorithm definition data set comprising the following features: a model typology (e.g. CNN model), configuration values (e.g. the values of the weights of the CNN or other parameters) and variable types (i.e. the variable processed by the algorithm itself).

Moreover, according to a preferred embodiment, the employed mathematical prediction algorithm 302 is adaptive that is to say that the mathematical prediction algorithm 302 can be modified automatically, by modifying one or more of the features of the definition data set.

As an example of the adaptive functionality, the mathematical prediction algorithm 302 can be configured to process a first plurality of variables and, subsequently, can be automatically re-configured (i.e. re-trained) in order to process a second plurality of variables, comprising additional variables.

According to an embodiment, the machine learning of the employed mathematical prediction algorithm 302 can start from a predefined calculation situation, where the weights of estimating function variables are pre-established (e.g. provided by the knowledge configuring and updating module 106) to subsequently evolve, taking into consideration further data or results also obtained from other monitored areas of interest.

Particularly, an employable mathematical prediction algorithm 302 of the non-neural network type is the Logistic Regression in which the probability of an event P is calculated as:

$$ P \ = \ \frac{1}{1+e^{-z}} \qquad\qquad (1) $$

where:

$$ Z \ = \ \sum_{i=1}^{N} \beta + W_i X_i \qquad\qquad (2) $$

In equation (2):

> $Xi$ are the values assumed by the variables (or descriptors) identified (e.g. gradient of increase of the flies, gradient of increase of temperature in the last periods, gradient of humidity, etc.);
> $Wi$ are the weights of the model developed by the machine learning related to the contribution of the individual variables for the computation of the attack probability.
> $\beta$ is y-intercept.

In accordance with the above description, in an initial stage the attack probability P can be estimated by expression (1) as trained with data known in the literature, and subsequently the prediction model can be reconfigured considering further data and/or additional variables (e.g. user's feedbacks, additional variables Xi) to calculate the probability of local attack with improved precision.

With reference to the particularly embodiment in which the mathematical prediction algorithm 302 is adaptive, it is further noticed that the risk prediction module 104 can be provided with a difference matching module 113 (DIFF), such as a software tool. The difference matching module 113 executes a difference matching algorithm which constantly compares a current prediction algorithm definition data set with previous defined prediction algorithm definition data set or data set referred to other areas of interest to detect possible difference.

As an example, a plurality of current variables (e.g. parameters time series) used in a current attack prediction is compared with a plurality of preceding variables (e.g. previous time series) used in previously performed attack predictions in order to identify possible changes. If changes are identified, the difference matching module 113 starts collecting data provided by the sensing apparatus 102, corresponding to the changed variables, and transfers them to the knowledge configuring and updating module 106 to evaluate the elaboration of new prediction algorithm definition data set. In figure 1, the transmission of a new prediction algorithm definition data set (or further data/improvements) from the risk prediction module 104 to the the knowledge configuring and updating module 106 is represented by a link LKDI.

Advantageously, the risk prediction module 104 also comprises an alerting module 110 (ALRT-MOD) configured to generate an alerting signal $S_{AL}$ indicating predicted insect attacks to the area of interests. Particularly, the risk prediction module 104 provides a smart communication path between the insect identification module 103, the knowledge configuring and updating module 106 and/or other external communication devices (such as smart phones, or personal computers) associated to users (e.g. farmers) interested in being informed about possible insect attacks. More particularly, the alerting module 110 integrates with most common UC solution APIs (e.g. Cisco Webex, Amazon Chime, Microsoft Skype, etc.) to allow a natural language interaction between the machine and the operators responsible for the entire process. As an example, operators can use sentences like "what is the $CO_2$ level now?" and get contextual and specific answers back.

In addition, the insect attack prediction apparatus 100 can be provided, with a smart maintenance module 110 (SMN) responsible to provide a smart way to keep the hardware fully functional. Particularly, the smart maintenance module 111 (e.g. a software tool) uses as input the information stored in the local knowledge module 105 that are relevant to the specific hardware used (e.g. type of sticky paper, type of pheromone, etc.) and correlates it with sensor information (e.g. VOC air measurements, temperature and humidity history, current coverage of the sticky paper, etc.) to provide information about maintenance needs. As an example, the smart maintenance module 111 could evaluate that the density of the pheromone is not sufficient to guarantee a good level of sexual attraction of the targeted insect and consequently trigger a notification to change it. Furthermore, the smart maintenance module 111 can evaluate the presence of too many insects on the sticky paper to run properly the identification process and, consequently, send a notification to replace the paper.

In an embodiment, the insect attack prediction apparatus 100 can be provided with a smart management module 112 (SMG) which is responsible to adapt the work parameters of the entire prediction system 100. For instance, if the number of insects caught in a specific timeframe is significantly greater than those captured in previous periods, the smart management module 112 (a software tool) may decide to change the sampling rate increasing its frequency. Furthermore, if specific anomalies (e.g. high level of CO2) are identified, the smart management module 112 may decide to change the sampling rate again and go back to original value until when anomalies disappear.

It is noticed that the prediction stem 100 can be also configured to predict attacks made by more than one insect species.

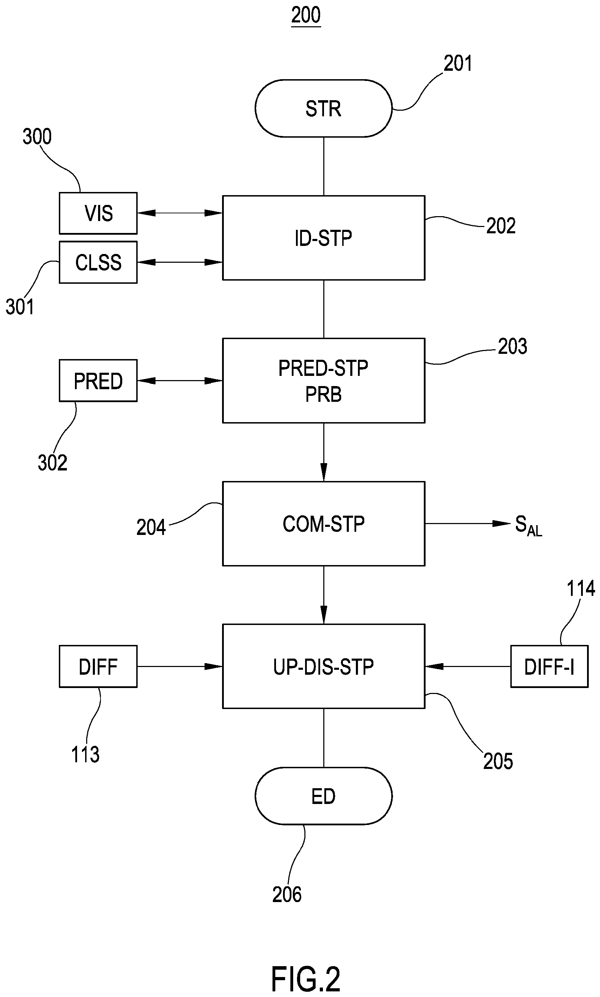

Figure 2 shows a flowchart 200 representing an example of an insect prediction method implementable by the insect attack prediction systems 100.

After a symbolic start step 201 the operation method 200 includes an insect identification step 202, which can be carried out by the insect identification module 103. In the insect identification step 202 one or more digital images IM provided by the camera 107 are processed according to the vision algorithm 300 and the insect classification algorithm 301 to provide a presence data IPD, representing the presence of identified insects in the area of interest for insect attack.

Particularly, the identification step 202 runs every T period of time (e.g. initial T being one hour). More particularly, a comparison of parameters extracted from the image IM with pre-established entomological parameters (having pre-established values) associated with specific insect species is performed. Moreover, the insect classification algorithm 301 may also take into consideration meteorological quantities and environmental quantities. This analysis compares information extracted from the sensor apparatus 102 with entomological behavioural parameters for every specific insect.

Particularly, the computer vision algorithm 300 also identifies relevant insect position on the catching sticky paper to create and take into account historical series. Thanks to this historical series generation and analysis process, insects identified in period T shall not be identified as new insects in interval T+1.

It is noticed that, advantageously, the measured quantities provided by the sensing apparatus 102 and the digital images IM are provided to the configuring and updating module 106 in order to allow the updating of the identification algorithms associated to other area of interests.

In a prediction step 203 (PRED-STP), which can be carried out by the risk prediction module 104, the results of the identification step 202, together with a current insect behavioural knowledge data set, is processed by the mathematical prediction algorithm 302 to estimate a risk of attack (e.g. a probability PRB) to the area of interest.

Particularly, the risk prediction module 104 runs with same frequency of the insect identification module 103 and gets information/data coming from the insect identification module 103 every T time. The prediction step 203 can provide, as an example, a gradient of insect presence based on the short-term history.

If the probability PRB of an insect attack is greater than a pre-established threshold the alerting signal $S_{AL}$ (e.g. "Insect X attack happening in area Y") is generated and transmitted to the alerting module 110 to communicate it to the relevant users, in a communication step 204.

It is noticed that the prediction module 104 operates according to a multi-parameter approach according to which the mathematical prediction algorithm 302 it is based not only on the insect presence data IPD but also on ore more of acquired further quantities/data (such as, meteorological quantities, environmental quantities and/or historical data). Said multi-parameter approach is particularly efficient since it reproduces with good approximation the complex natural phenomena.

Moreover, the prediction method 200 can include an updating and distributing step 205 in which, if a richer and more effective insect behavioural knowledge data set is detected (i.e. by the difference detection module 114), this data set is stored in the relevant local knowledge module 105 and distributed to other relevant local knowledge modules 105. Also an updating of the mathematical prediction algorithm 302 can be performed by updating the prediction algorithm definition data set, when the difference module 113 detects this necessity.

Method 200 ends with a symbolic end step 206 (ED).

Advantages

The described system and method show several advantages over the prior art techniques.

The described prediction system and method based on a multi-parameter algorithm (i.e. not exclusively based on insect identification) allow automatic and precise evaluation of potential risk for the area covered by the analyser. Moreover, an automatic notification to relevant people of the attack probabilities can be performed by the described system. Also the particular insect identification method, not based only on entomological parameters, shows advantages in its efficiency.

Furthermore, the system and method as described above, also allow creating an insect behavioural knowledge data set which represents a structured knowledge base of the issue under analysis (i.e. insect attack pattern) that can be modified and adapted on the basis of real time observations.

In addition, the capability of the attack prediction algorithm to be adaptive makes the method able to automatically adapt to short and long term context changes. Particularly, the capability to learn and adapt to changing nature of the issue under analysis shown by the described method is particularly advantageous since during past years insect attacks have been very unpredictable due to the changes in the context (weather, pollutions, seasonal shifts, etc.).

**Claims**

1. Insect attack prediction system (100), comprising:
at least one processor provided with a plurality of software modules comprising:

an insect identification module (103) configured to process at least one insect digital image (IM) to provide a presence value (IPD), representing the presence of insects in an area of interest for insect attack;
a data collecting module (102) configured to acquire insect behavioural data associated to said area and comprising at least one of the following data groups: meteorological data; environmental data; historical data of insect presence;
a prediction module (104) configured to process the presence value (IPD) and the insect behavioural data according to a mathematical prediction algorithm (302) to estimate a risk of attack (PRB) to the area of interests;
wherein the plurality of software modules further comprise:

an updating and configuring module (106) configured to define a current mathematical prediction algorithm (302) by defining a current prediction algorithm definition data set comprising: a prediction model typology, algorithm configuration values, algorithm variable types;
a difference matching module (113) configured to detect differences between the current prediction algorithm definition data set associated to the area of interest with a further prediction algorithm definition data set associated to a further area of interest or to preceding acquisition time;
wherein
the updating and configuring module (106) is further configured to update the current mathematical prediction algorithm (302) by employing the further prediction algorithm definition data set.

2. The system of claim 1, wherein the insect identification module (103) comprises:

a visual computer algorithm (300) configured to process the at least one insect image and extract entomological measured parameters;
an insect classification algorithm (301) configured to identify an insect from the extract entomological measured parameters and provide the presence value.

3. The system of claim 1, wherein:

the meteorological data are selected from the following quantities: temperature, humidity, pressure, moisture level, leaf hygrometer;
the environmental data are selected from the following parameters: quality of air, carbon dioxide $CO_2$ concentration, carbon monoxide CO concentration, Volatile Organic Compounds concentration, ammonia concentration, luminosity, sound presence, sound level, long terms seasonal time, presence of pesticide;
historical data for insect presence include data on insect attacks to the area of interest occurred before a current period of time submitted to the risk prediction.

4. The system of claim 1 or claim 2, wherein the mathematical prediction algorithm (302) and the insect classification algorithm (301) can be algorithms selected from the group: neural network based model, non-neural network based model.

5. The system of claim 1, wherein the plurality of software modules further comprise:
a local knowledge module (105) structured to store a current insect behavioural knowledge data set based on a value set assumed by at least one of the following set: entomologic parameters, meteorological quantities, environmental quantities and corresponding insect identified species.

6. The system of claims 2 and 4, wherein:

said insect classification algorithm (301) is based on the current insect behavioural knowledge data set;
wherein the plurality of software modules an updating module (106) configured to said replace the current insect behavioural knowledge data set being modified with an updated insect behavioural knowledge data set.

7. The system of claim 5, wherein the plurality of software modules comprises a difference detection module (114) configured to:

detect differences between the current insect behavioural knowledge data set associated to the area of interest with a further insect behavioural knowledge data set associated to a further area of interest or to preceding acquisition time;
replace the current insect behavioural knowledge data set with the further insect behavioural knowledge data set in connection with said area of interest.

8. The system of claim 4, wherein:

the non-neural network based model is logistic regression;

the neural network based model is selected from the group comprising: Convolutional Neural Network, Deep Neural Network.

9. Insect attack prediction method (200), comprising:

processing (202) at least one insect digital image (IM) to provide a presence value (IPD), representing the presence of insects in an area of interest for insect attack;

acquiring insect behavioural data associated to said area and comprising at least one of the following data groups: meteorological data; environmental data; historical data of insect presence,

processing (203) the presence value (IPD) and the insect behavioural data according to a mathematical prediction algorithm (302) to estimate a risk of attack (PRB) to the area of interest;

the insect attack prediction method (200) further including:

defining, by an updating and configuring module (106), a current mathematical prediction algorithm (302) by defining a current prediction algorithm definition data set comprising: a prediction model typology, algorithm configuration values, algorithm variable types;

detecting, by a difference matching module (113), differences between the current prediction algorithm definition data set associated to the area of interest with a further prediction algorithm definition data set associated to a further area of interest or to preceding acquisition time;

updating the current mathematical prediction algorithm (302) by employing the further prediction algorithm definition data set and said updating and configuring module (106).

**Patentansprüche**

1. System zur Vorhersage von Insektenbefall (100), umfassend:

mindestens einen Prozessor, der mit einer Vielzahl von Softwaremodulen versehen ist, umfassend:

ein Insektenidentifizierungsmodul (103), das konfiguriert ist, um mindestens ein digitales Insektenbild (IM) zu verarbeiten, um einen Präsenzwert (IPD) bereitzustellen, der die Präsenz von Insekten in einem für einen Insektenbefall Bereich von Interesse darstellt;

ein Datenerfassungsmodul (102), das konfiguriert ist, um von dem Bereich zuzuordnenden Verhaltensdaten von Insekten zu erfassen und mindestens eine der folgenden Datengruppen umfasst: meteorologische Daten; Umweltdaten; historische Daten zur Insektenpräsenz;

ein Vorhersagemodul (104), das konfiguriert ist, um den Präsenzwert (IPD) und die Insektenverhaltensdaten gemäß einem mathematischen Vorhersagealgorithmus (302) zu verarbeiten, um ein Befallsrisiko (PRB) für den Bereich von Interesse abzuschätzen;

wobei die Vielzahl von Softwaremodulen ferner umfasst:

ein Aktualisierungs- und Konfigurationsmodul (106), das konfiguriert ist, um einen aktuellen mathematischen Vorhersagealgorithmus (302) durch Definieren eines aktuellen Definitionsdatensatzes eines Vorhersagealgorithmus zu definieren, umfassend: eine Vorhersagemodelltypologie, Algorithmuskonfigurationswerte, Algorithmusvariablentypen;

ein Differenzabgleichmodul (113), das konfiguriert ist, um Unterschiede zwischen dem aktuellen dem Bereich von Interesse zuzuordnenden Definitionsdatensatz des Vorhersagealgorithmus und einem weiteren Bereich von Interesse oder einem vorhergehenden Erfassungszeitpunkt zuzuordnenden Definitionsdatensatz des Vorhersagealgorithmus zu erkennen;

wobei:

das Aktualisierungs- und Konfigurationsmodul (106) ferner konfiguriert ist, um den aktuellen mathematischen Vorhersagealgorithmus (302) durch Verwenden des weiteren Definitionsdatensatzes des Vorhersagealgorithmus zu aktualisieren.

2. System nach Anspruch 1, wobei das Insektenidentifizierungsmodul (103) umfasst:

einen visuellen Computeralgorithmus (300), der konfiguriert ist, um das mindestens eine Insektenbild zu verarbeiten und entomologische Messparameter zu extrahieren;

einen Insektenklassifizierungsalgorithmus (301), der konfiguriert ist, um ein Insekt aus den extrahierten entomologischen Messparametern zu identifizieren und den Präsenzwert bereitzustellen.

3. System nach Anspruch 1, wobei:

die meteorologischen Daten aus folgenden Größen ausgewählt werden: Temperatur, Luft-

feuchtigkeit, Druck, Feuchtigkeitsgehalt, Blatt-hygrometer;

die Umweltdaten aus den folgenden Parametern ausgewählt werden: Luftqualität, Kohlendioxid-$CO_2$-Konzentration, Kohlenmonoxid-CO-Konzentration, Konzentration flüchtiger organischer Verbindungen, Ammoniakkonzentration, Leuchtstärke, Geräuschpräsenz, Geräuschpegel, langfristige Jahreszeit, Vorhandensein von Pestiziden;

die historischen Daten zur Insektenpräsenz Daten zu Insektenbefallereignissen im Gebiet von Interesse einschließen, die vor einem aktuellen Zeitraum stattfanden, der für die Risikovorhersage herangezogen wird.

4. System nach Anspruch 1 oder Anspruch 2, wobei der mathematische Vorhersagealgorithmus (302) und der Insektenklassifizierungsalgorithmus (301) Algorithmen sein können, die ausgewählt sind aus der Gruppe bestehend aus: auf neuronalen Netzwerken basierendes Modell, nicht auf neuronalen Netzwerken basierendes Modell.

5. System nach Anspruch 1, wobei die Vielzahl von Softwaremodulen ferner umfasst:
ein lokales Wissensmodul (105), das strukturiert ist, um einen aktuellen Wissensdatensatz zum Insektenverhalten basierend auf einem Wertesatz zu speichern, der auf mindestens einem der folgenden Sätze beruht: entomologischen Parametern, meteorologischen Größen, Umweltgrößen und entsprechenden identifizierten Insektenarten.

6. System nach Ansprüchen 2 und 4, wobei:

der Insektenklassifizierungsalgorithmus (301) auf dem aktuellen Wissensdatensatz zum Insektenverhalten basiert;
wobei die Vielzahl von Softwaremodulen ein Aktualisierungsmodul (106) umfasst, das konfiguriert ist, um den in Änderung befindlichen aktuellen Wissensdatensatz zum Insektenverhalten durch einen aktualisierten Wissensdatensatz zum Insektenverhalten zu ersetzen.

7. System nach Anspruch 5, wobei die Vielzahl von Softwaremodulen ein Differenzerkennungsmodul (114) umfasst, das konfiguriert ist zum:

Erkennen von Unterschieden zwischen dem aktuellen Wissensdatensatz zum Insektenverhalten, der dem Bereich von Interesse zugeordnet ist, und einem weiteren Wissensdatensatz zum Insektenverhalten, der einem weiteren Bereich von Interesse oder einem vorhergehenden Erfassungszeitpunkt zugeordnet ist;
Ersetzen des aktuellen Wissensdatensatzes zum Insektenverhalten durch den weiteren Wissensdatensatz zum Insektenverhalten im Zusammenhang mit dem Bereich von Interesse.

8. System nach Anspruch 4, wobei:

das nicht auf einem neuronalen Netz basierende Modell die logistische Regression ist;
das auf einem neuronalen Netz basierende Modell aus der Gruppe ausgewählt ist umfassend: faltungsneuronales Netz, tiefes neuronales Netz.

9. Verfahren (200) zur Vorhersage von Insektenbefall, umfassend:

Verarbeiten (202) mindestens eines digitalen Insektenbildes (IM), um einen Präsenzwert (IPD) bereitzustellen, der die Präsenz von Insekten in einem für einen Insektenbefall Bereich von Interesse darstellt;
Erfassen von Daten zum Insektenverhalten, die dem Bereich zugeordnet sind und mindestens eine der folgenden Datengruppen umfassen: meteorologische Daten; Umweltdaten; historische Daten zur Insektenpräsenz;
Verarbeiten (203) des Präsenzwerts (IPD) und der Daten zum Insektenverhalten gemäß einem mathematischen Vorhersagealgorithmus (302), um ein Befallsrisiko (PRB) für den Bereich von Interesse abzuschätzen;
wobei das Verfahren (200) zur Vorhersage eines Insektenbefalls ferner einschließt:

Definieren, durch ein Aktualisierungs- und Konfigurationsmodul (106), eines aktuellen Definitionsatzes eines Vorhersagealgorithmus (302), umfassend: eine Vorhersagemodelltypologie, Algorithmuskonfigurationswerte, Algorithmusvariablentypen;
Erkennen, durch ein Differenzabgleichmodul (113), von Unterschieden zwischen dem aktuellen, dem Bereich von Interesse zugeordneten Definitionsdatensatz eines Vorhersagealgorithmus und einem weiteren Bereich von Interesse oder einem vorhergehenden Erfassungszeitpunkt zugeordneten Definitionsdatensatz eines Vorhersagealgorithmus;
Aktualisieren des aktuellen mathematischen Vorhersagealgorithmus (302) durch Verwenden des weiteren Definitionsdatensatzes eines Vorhersagealgorithmus und des Aktualisierungs- und Konfigurationsmoduls (106).

## Revendications

1. Système de prédiction d'attaque d'insectes (100), comprenant :
   au moins un processeur pourvu d'une pluralité de modules logiciels comprenant :

   un module d'identification d'insectes (103) configuré pour traiter au moins une image numérique d'insecte (IM) afin de fournir une valeur de présence (IPD) représentant la présence d'insectes dans une zone d'intérêt pour l'attaque d'insectes ;
   un module de collecte de données (102) configuré pour acquérir des données de comportement d'insectes associées à ladite zone et comprenant au moins l'un parmi les groupes de données suivants : données météorologiques ; données environnementales ; données historiques de présence d'insectes ;
   un module de prédiction (104) configuré pour traiter la valeur de présence (IPD) et les données de comportement d'insectes selon un algorithme de prédiction mathématique (302) afin d'estimer un risque d'attaque (PRB) pour la zone d'intérêt ;
   dans lequel la pluralité de modules logiciels comprend en outre :

   un module de mise à jour et de configuration (106) configuré pour définir un algorithme de prédiction mathématique actuel (302) en définissant un ensemble de données de définition d'algorithme de prédiction actuel comprenant : une typologie de modèle de prédiction, des valeurs de configuration d'algorithme, des types de variables d'algorithme ;
   un module de mise en correspondance de différence (113) configuré pour détecter des différences entre l'ensemble de données de définition d'algorithme de prédiction actuel associé à la zone d'intérêt et un ensemble de données de définition d'algorithme de prédiction supplémentaire associé à une zone d'intérêt supplémentaire ou au temps d'acquisition précédent ;
   dans lequel
   le module de mise à jour et de configuration (106) est en outre configuré pour mettre à jour l'algorithme de prédiction mathématique actuel (302) en utilisant l'ensemble de données de définition d'algorithme de prédiction supplémentaire.

2. Système selon la revendication 1, dans lequel le module d'identification d'insectes (103) comprend :

   un algorithme informatique visuel (300) configuré pour traiter l'au moins une image d'insecte et extraire des paramètres entomologiques mesurés ;
   un algorithme de classification d'insectes (301) configuré pour identifier un insecte à partir des paramètres entomologiques mesurés extraits et fournir la valeur de présence.

3. Système selon la revendication 1, dans lequel :

   les données météorologiques sont choisies parmi les quantités suivantes : température, humidité, pression, niveau d'humidité, hygromètre à feuilles ;
   les données environnementales sont choisies parmi les paramètres suivants : qualité de l'air, concentration de dioxyde de carbone $CO_2$, concentration de monoxyde de carbone CO, concentration de composés organiques volatils, concentration d'ammoniac, luminosité, présence de sons, niveau sonore, temps saisonnier à long terme, présence de pesticides ;
   les données historiques de présence d'insectes comportent des données sur des attaques d'insectes survenues dans la zone d'intérêt avant une période de temps actuelle soumise à la prédiction de risque.

4. Système selon la revendication 1 ou la revendication 2, dans lequel l'algorithme de prédiction mathématique (302) et l'algorithme de classification d'insectes (301) peuvent être des algorithmes choisis dans le groupe : modèle basé sur un réseau neuronal, modèle non basé sur un réseau neuronal.

5. Système selon la revendication 1, dans lequel la pluralité de modules logiciels comprend en outre :
   un module de connaissances locales (105) structuré pour stocker un ensemble de données de connaissances comportementales d'insectes actuel, sur la base d'un ensemble de valeurs supposé par au moins l'un parmi les ensembles suivants : paramètres entomologiques, quantités météorologiques, quantités environnementales et espèces d'insectes identifiées correspondantes.

6. Système selon les revendications 2 et 4, dans lequel :

   ledit algorithme de classification d'insectes (301) est basé sur l'ensemble de données de connaissance de comportement d'insectes actuel ;
   dans lequel la pluralité de modules logiciels un module de mise à jour (106) configuré pour ledit remplacement de l'ensemble de données de connaissance de comportement d'insectes actuel étant modifié par un ensemble de données de connaissance de comportement d'insectes mis à jour.

7.  Système selon la revendication 5, dans lequel la pluralité de modules logiciels comprend un module de détection de différence (114) configuré pour :

    détecter des différences entre l'ensemble de données de connaissance de comportement d'insectes actuel associé à la zone d'intérêt et un ensemble de données de connaissance de comportement d'insectes supplémentaire associé à une zone d'intérêt supplémentaire ou au temps d'acquisition précédent ;
    remplacer l'ensemble de données de connaissance de comportement d'insectes actuel par l'ensemble de données de connaissance de comportement d'insectes supplémentaire en rapport avec ladite zone d'intérêt.

8.  Système selon la revendication 4, dans lequel :

    le modèle non basé sur un réseau neuronal est la régression logistique ;
    le modèle basé sur un réseau neuronal est choisi dans le groupe comprenant : réseau neuronal convolutif, réseau neuronal profond.

9.  Procédé de prédiction d'attaque d'insectes (200), comprenant :

    le traitement (202) d'au moins une image numérique d'insecte (IM) pour fournir une valeur de présence (IPD) représentant la présence d'insectes dans une zone d'intérêt pour l'attaque d'insectes ;
    l'acquisition de données de comportement d'insectes associées à ladite zone et comprenant au moins l'un parmi les groupes de données suivants : données météorologiques ; données environnementales ; données historiques de présence d'insectes,
    le traitement (203) de la valeur de présence (IPD) et des données comportementales d'insectes selon un algorithme de prédiction mathématique (302) pour estimer un risque d'attaque (PRB) dans la zone d'intérêt ;
    le procédé de prédiction d'attaque d'insectes (200) comportant en outre :

        la définition, par un module de mise à jour et de configuration (106), d'un algorithme de prédiction mathématique actuel (302) en définissant un ensemble de données de définition d'algorithme de prédiction actuel comprenant : une typologie de modèle de prédiction, des valeurs de configuration d'algorithme, des types de variables d'algorithme ;
        la détection, par un module de mise en correspondance de différences (113), des différences entre l'ensemble de données de définition d'algorithme de prédiction actuel associé à la zone d'intérêt et un ensemble de données de définition d'algorithme de prédiction supplémentaire associé à une zone d'intérêt supplémentaire ou au temps d'acquisition précédent ;
        la mise à jour de l'algorithme de prédiction mathématique actuel (302) en utilisant l'ensemble de données de définition d'algorithme de prédiction supplémentaire et ledit module de mise à jour et de configuration (106).

FIG.1

EP 3 923 717 B1

<u>200</u>

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105850930 A
- CN 108244071 A
- IT 102018000001753
- IT 201800001753